# EUROPEAN PATENT SPECIFICATION

(11) **EP 1 702 004 B1**
(45) Date of publication and mention of the grant of the patent: **17.12.2008**
(21) Application number: 04808395.0
(22) Date of filing: 13.12.2004
(51) Int. Cl.: C08L 69/00

(54) **POLYCARBONATE RESIN COMPOSITION WITH GOOD FATIGUE STRENGTH**
POYCARBONATHARZZUSAMMENSETZUNG MIT GUTER DAUERFESTIGKEIT
COMPOSITION DE RESINE DE POLYCARBONATE PRESENTANT UNE GRANDE RESISTANCE A LA FATIGUE

(30) Priority: 23.12.2003 KR 2003095615
(43) Date of publication of application: 20.09.2006
(73) Proprietor: Cheil Industries Inc., Gumi-si, Gyeongsangbuk-do 730-710 (KR)
(72) Inventor: SEO, Kyung Hoon, 115-1102 Gwanak Dreamtown Apt., Seoul, 151-770 (KR); KIM, Kyung Tae, Seoul, 139-746 (KR); MIN, Sung Sig, Seoul, 157-861 (KR); LEE, Bong Jae, Seoul, 138-849 (KR)
(74) Representative: Bublak, Wolfgang
(86) International application number: PCT/KR2004/003264
(87) International publication number: WO 2005/061621

(56) References cited:
- EP-A- 0 297 353
- JP-A- 3 281 561
- JP-A- 2000 129 111
- KR-A- 20010 019 451
- US-A- 4 481 330
- US-A1- 2002 183 425

## Description

### Field of the Invention

The present invention relates to a polycarbonate resin composition. More particularly, the present invention relates to a polycarbonate resin composition with good fatigue strength, impact strength and other mechanical properties.

### Background of the Invention

In general, a polycarbonate resin has been widely used as an engineering plastic due to its excellence in impact strength, self-extinguish, dimension stability, heat resistance compared to other resins. Particularly, the polycarbonate resin is extensively applied to portable electronic devices such as cellular phone which need excellent impact strength at severe circumstances. Most of the portable electronic devices have been developed as a folder type to improve the functions of the devices as well as the design thereof.

Such folder type portable electronic devices are repeatedly used every day and the connection portion of the folder is fatigued. When conventional polycarbonate resins are applied to the connection portion of the folder type portable electronic devices, the conventional polycarbonate resins are not good due to the fatigue phenomena.

Accordingly, wide research and development have been carried out to overcome the shortcoming of the polycarbonate resin so as to provide a polycarbonate resin with good fatigue strength. A conventional prior technology for improving the fatigue phenomena is introduce an inorganic filler such as glass fiber or carbon fiber, thereby improving the rigidity of the polycarbonate resin. However, although the conventional technology can overcome the fatigue phenomena, the impact strength is rapidly deteriorated due to the inorganic filler and the appearance of articles becomes worse because the inorganic filler comes out on the surface. Nevertheless, in case that good fatigue strength is required, the conventional polycarbonate resin reinforced with an inorganic filler has been employed.

The inventors of the present invention have conducted a research to overcome the shortcoming of the conventional polycarbonate resin and developed a new polycarbonate resin with good fatigue strength as well as good impact strength when a thermotropic aromatic liquid crystalline polymer resin and a core-shell graft copolymer are introduced to polycarbonate.

### Objects of the Invention

An object of the present invention is to provide a polycarbonate resin composition with good fatigue strength.

Another object of the present invention is to provide a polycarbonate resin composition with good fatigue strength as well as good impact strength.

Other objects and advantages of this invention will be apparent from the ensuing disclosure and appended claims.

### Summary of the Invention

The polycarbonate resin composition having good fatigue strength according to the present invention comprises (A) 80 to 98 parts by weight of a polycarbonate resin, (B) 0.1 to 10 parts by weight of a thermotropic aromatic liquid crystalline polymer resin and (C) 1 to 20 parts by weight of a core-shell grafted copolymer.

### Detailed Description of the Invention

The components of the polycarbonate resin according to the present invention are described in detail as follow.

### (A) Polycarbonate Resin

The polycarbonate resin (A) employed in the polycarbonate resin composition according to the present invention is well known to an ordinarily skilled person in the art to which the present invention pertains. More detailed description will be described below.

The polycarbonate resin for the present invention may be prepared by reacting dihydric phenol with phosgene at the presence of a molecular weight controlling agent and a catalyst or through an ester exchange reaction of dihydric phenol with a carbonate precursor like diphenyl carbonate. The polycarbonate resin may include linear polycarbonates, branched polycarbonates and polyester carbonate copolymers.

A preferable dihydric phenol for this invention is bisphenol, and the most preferable dihydric phenol is 2,2-bis-(4-hydroxyphenyl)-propane called 'bisphenol A'. The bisphenol A may be substituted with other dihydric phenol partially or in total. The examples of the dihydric phenol are hydroquinone, 4,4'-dihydroxydiphenol, bis-(4-hydroxyphenyl)-methane,
1,1-bis-(4-hydroxyphenyl)-cyclohexane,
2,2-bis-(3,5-dichloro-4-hydroxyphenyl)-propane, bis-(4-hydroxyphenyl)-sulfide,
bis-(4-hydroxyphenyl)-sulphone, bis-(4-hydroxyphenyl)-sulfoxide,
bis-(4-hydroxyphenyl)-ketone, bis-(4-hydroxyphenyl)-ether, and a halogenated bisphenol such as 2,2-bis-(3,5-dibromo-4-hydroxyphenyl)-propane.

In the present invention, the polycarbonate resin (A) may be a homopolymer, a copolymer using at least two dihydric phenols, or a mixture of the polymers. An example of the linear polycarbonate is bisphenol A polycarbonate resin. The branched polycarbonate for the present invention is prepared by reacting a polyfunctional aromatic compound such as trimelitic anhydride and trimelitic acid with dihydric phenol and a carbonate precursor. A preferable polycarbonate copolymer in the present invention is prepared by reacting a difunctional carboxylic acid with dihydric phenol and a carbonate precursor.

In the present invention, the polycarbonate resin is used in an amount of about 80 to 98 parts by weight as a base resin.

### (B) Thermotropic Aromatic Liquid Crystalline Polymer Resin

An aromatic polyester resin or an aromatic polyester amide resin may be used as a thermotropic aromatic liquid crystalline polymer resin for this invention. Such aromatic polyester resin and aromatic polyester amide resin are disclosed in European Patent Nos. 0191705 and 0272992, and US Patent Nos. 4,161,470 and 4,330,457.

The aromatic polyester resin (b₁) of the present invention has a chemical structure having at least one repeating unit selected from the group consisting of a repeating unit as shown in Chemical Formula 1 ("repeating unit 1"), a repeating unit as shown in Chemical Formula 2 ("repeating unit 2"), and a repeating unit as shown in Chemical Formula 3 ("repeating unit 3").

A preferable liquid crystalline polymer resin containing repeating units 1, 2 and 3 has a mole ration that repeating unit 1 is about 50 mole % to the sum of repeating units 2 and 3. In case that the liquid crystalline polymer resin contains repeating units 2 and 3, it is preferable that repeating unit 2 is about up to 70 mole % and that repeating unit 3 is about 100 to 30 mole %. 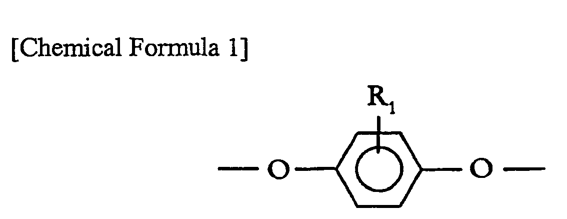 where R₁ is methyl, ethyl, Cl or Br.

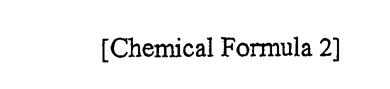

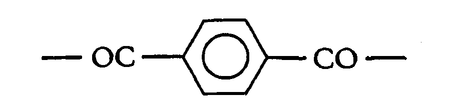

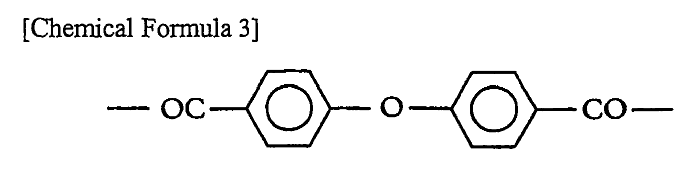

The aromatic polyester amide resin (b₂) of the present invention comprises at least one repeating unit selected from the group consisting of repeating units 1, 2 and 3, and a repeating unit as shown in Chemical Formula 4 ("repeating unit 4"). In case that the aromatic polyester amide resin comprises repeating units 1 and 2, if A in Chemical Formula 4 is oxygen (O), repeating unit 1 is about 25 to 90 mole % and repeating unit 2 is about 75 to 10 mole %, and if A in Chemical Formula 4 is NH, repeating unit 1 is about 0 to 95 mole % and repeating unit 2 is about 100 to 5 mole %. 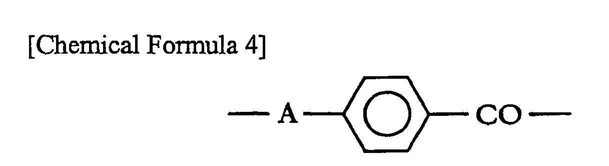 where A is O or NH.

Further, the aromatic polyester amide resin (b₂) may include a repeating unit as shown in Chemical Formula 5 ("repeating unit 5").

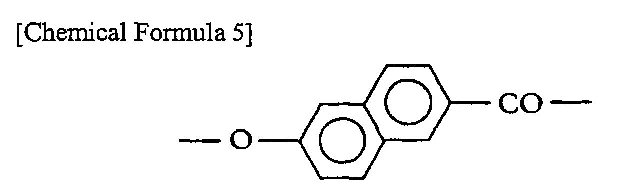

In addition, the aromatic polyester amide resin (b₂) may further comprise a repeating unit as shown in Chemical Formula 6 ("repeating unit 6"). A preferable aromatic polyester amide resin containing repeating units 2, 5 and 6 has mole ratios that repeating unit 5 is about 10 to 90 mole % to the sum of repeating units 2 and 6, that repeating unit 2 is about 5 to 45 mole % to the sum of repeating units 5 and 6, and that repeating unit 6 is about 5 to 45 mole % to the sum of repeating units 2 and 5. 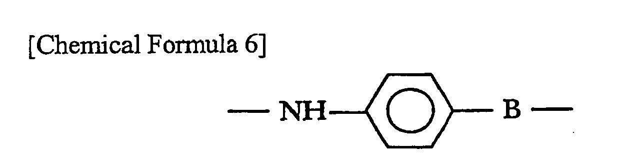 where B is O or NH.

Furthermore, the thermotropic aromatic liquid crystalline polymer resin (B) may further comprise at least one repeating unit selected from the group consisting of a repeating unit as shown in Chemical Formula 7 ("repeating unit 7"), a repeating unit as shown in Chemical Formula 8 ("repeating unit 8"), a repeating unit as shown in Chemical Formula 9 ("repeating unit 9"), and a repeating unit as shown in Chemical Formula 10 ("repeating unit 10"). Repeating units 7, 8, 9 or 10 may be used up to 10 mole % to repeating unit 1. 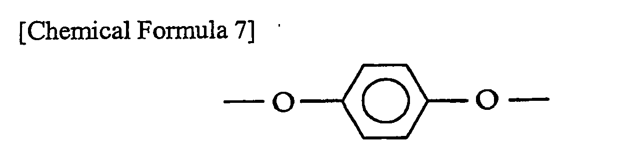 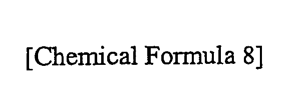 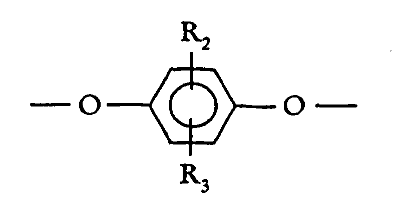 where R₂ and R₃ are independently methyl, ethyl, Cl or Br. 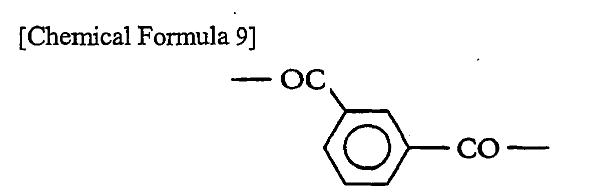 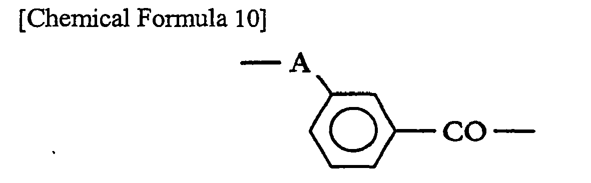 where A is O or NH.

In the present invention, the thermotropic aromatic liquid crystalline polymer resin (B) is employed in an amount of about 0.1 to 10 parts by weight, preferably about 0.1 to 7 parts by weight, and more preferably about 0.1 to 5 parts by weight. If the thermotropic aromatic liquid crystalline polymer resin is used less than 0.1 parts by weight, good fatigue strength cannot be obtained. On the other hand, if the thermotropic aromatic liquid crystalline polymer resin is used in excess of 10 parts by weight, impact strength can be deteriorated.

### (C) Core-Shell Graft Copolymer

The core-shell graft copolymer (C) employed in the polycarbonate resin composition according to the present invention is well known to an ordinarily skilled person in the art to which the present invention pertains. A preferable core-shell graft copolymer is formed with a hard shell in which vinyl monomers are grafted onto the core structure of rubber.

The core-shell graft copolymer for this invention has a core-shell structure by grafting at least one unsaturated compound selected from the group consisting of C₁-C₈ methacrylic acid alkyl esters, C₁-C₈ acrylic acid alkyl esters, maleic acid anhydrides, C₁-C₄ alkyl or phenyl nuclear-substituted maleimide onto a rubber polymerized with at least one selected from the group consisting of C₄-C₆ diene rubber monomer, acrylate rubber monomer and silicone rubber monomer. The rubber is preferably used in an amount of about 50 to 90 parts by weight per 100 parts by weight of the core-shell graft copolymer.

The examples of the acrylate rubber monomer are methyl acrylate, ethyl acrylate, n-propyl acrylate, n-butyl acrylate, 2-ethylhexyl acrylate, hexyl methacrylate, and 2-ethylhexyl methacrylate. A hardening agent is used in the polymerization of the rubber monomers. The examples of the hardening agent are ethylene glycol dimethacrylate, propylene glycol dimethacrylate, 1,3-buylene glycol dimethacrylate, 1,4-buylene glycol dimethacrylate, allyl methacrylate, and triallyl cyanurate.

The silicone rubber monomer for this invention is prepared from cyclosiloxane, and the examples of the silicone rubber monomer are hexamethyl cyclotrisiloxane, octamethyl cyclotetrasiloxane, decamethyl cyclopentasiloxane, dodecamethyl cyclohexasiloxane, trimethyltriphenyl cyclotrisiloxane, tetramethyltetraphenyl cyclotetrasiloxane, octaphenyl cyclotetrasiloxane, etc. At least one siloxane among the siloxanes above may be used for preparation of the silicone rubber. A hardening agent is used in the polymerization of the rubber monomers. The examples of the hardening agent are trimethoxymethylsilane, triethoxyphenylsilane, tetramethoxysilane, tetraethoxysilane, etc.

The C₁-C₈ methacrylic acid alkyl esters and C₁-C₈ acrylic acid alkyl esters of the present invention are monohydryl alcohols of C₁-C₈ as esters of methacrylic acid and acrylic acid, respectively.

The specific examples of the esters are methacrylic acid methyl ester, methacrylic acid ethyl ester and methacrylic acid propyl ester. Methacrylic acid propyl ester is the most preferable ester in this invention.

In the present invention, the core-shell graft copolymer (C) is employed in an amount of about 1 to 20 parts by weight, preferably about 1 to 10 parts by weight. If the core-shell graft copolymer is used less than 1 part by weight, good impact strength cannot be obtained. On the other hand, if the core-shell graft copolymer is used in excess of 20 parts by weight, elongation strength, flexural strength and flexural modulus are deteriorated.

Other additives may be included in the resin composition of the present invention. An important additive is organic filler such as glass fiber, carbon fiber, talk, silica, mica, and alumina. The organic filler can improve mechanical strength and heat distortion temperature of the resin composition. A ultraviolet absorbing agent, a heat stabilizer, an antioxidizing agent, a flame retardant, a lubricant, a pigment and/or dye can be added too.

The polycarbonate resin composition with good fatigue strength can be applied to portable mobile communications devices, precision electrical parts and devices, precision automobile parts and other various articles which require excellent fatigue strength as well as mechanical strength such as impact strength.

The present invention may be better understood by reference to the following examples that are intended for the purpose of illustration and are not to be construed as in any way limiting the scope of the present invention, which is defined in the claims appended hereto. In the following examples, all parts and percentage are by weight unless otherwise indicated.

### Examples

The detailed information and specification of the components (A), (B) and (C) of the polycarbonate resin composition according to the present invention are as follow:

### (A) Polycarbonate Resin

Bisphenol-A type linear polycarbonate resin with a weight average molecular weight (M_{w}) of about 25,000 was used as polycarbonate resin. The polycarbonate resin was manufactured by TEIJIN as PANLITE L-1250 WP.

### (B) Thermotropic Aromatic Liquid Crystalline Polymer Resin

A thermotropic aromatic liquid crystalline polymer resin with a melting point of 280 °C and a specific gravity of 1.40 was employed in this Examples, which was prepared by UENO Co., as UENO LCP A5000.

### (C) Core-Shell Graft Copolymer

A core-shell graft copolymer with a weight average particle size of about 0.1 µm was used as a reinforcing agent, in which about 20 to 30 parts by weight of methacrylic acid monomers are grafted onto about 80 to 70 parts by weight of butadiene rubber. The graft copolymer was manufactured by KUREHA Co., as PALALOID EXL-2602.

### Examples 1∼4

The components as shown in Table 1 were mixed in a conventional mixer and the mixture was extruded through a twin screw extruder with Φ =45 mm to prepare a product resin in pellet form. The resin pellets were dried at 110 °C over 3 hours and molded into test specimens using a 10 oz injection molding machine at injection temperature of 280-320 °C and at mold temperature of 60-90 °C.

The test specimens measured Notch Izod impact strength (1/8") in accordance with ASTM D256. And to measure fatigue strength, fatigue test was conducted for the test specimens. The fatigue test was carried out to apply 5000 psi stress 5 times per second repeatedly to the test specimens along the longitudinal direction until the fatigue destruction occurs. The test results are shown in Table 1.

### Comparative Examples 1∼3

Comparative Examples 1-3 were conducted in the same manner as in Example 1 except the composition of the components. The test results are shown in Table 1.

**Table 1**

| | | Examples | | | | Comparative Examples | | |
|---|---|---|---|---|---|---|---|---|
| | | 1 | 2 | 3 | 4 | 1 | 2 | 3 |
| Components | (A) | 94 | 90 | 96 | 92 | 100 | 95 | 84 |
| | (B) | 3 | 5 | 1 | 3 | - | - | 11 |
| | (C) | 3 | 5 | 5 | 5 | - | 5 | 5 |
| Notch Izod (kgf·cm/cm) | | 71 | 71 | 73 | 72 | 73 | 65 | 48 |
| Fatigue Test (times) | | 223,000 | 251,000 | 169,000 | 210,000 | 101,000 | 88,000 | 272,000 |

As shown in Table 1, Examples 1 to 4 employing a thermotropic aromatic liquid crystalline polymer resin (B) and a core-shell grafted copolymer (C) in appropriate ratio are excellent in fatigue strength compared to Comparative Example 1 of pure polycarbonate and Comparative Example 2 of polycarbonate and core-shell graft copolymer. Comparative Example 3 shows that the fatigue strength is excellent but the impact strength is deteriorated.

The present invention can be easily carried out by an ordinary skilled person in the art. Many modifications and changes may be deemed to be with the scope of the present invention as defined in the following claims.

## Claims

1. A polycarbonate resin composition having good fatigue strength, which comprises (A) 80 to 98 parts by weight of a polycarbonate resin, (B) 0.1 to 7 parts by weight of a thermotropic aromatic liquid crystalline polymer resin and (C) 1 to 20 parts by weight of a core-shell grafted copolymer.

2. The polycarbonate resin composition as defined in claim 1, wherein said thermotropic aromatic liquid crystalline polymer resin (B) is an aromatic polyester resin (b₁) or an aromatic polyester amide resin (b₂).

3. The polycarbonate resin composition as defined in claim 2, wherein said aromatic polyester resin (b₁) has a chemical structure comprising at least one repeating unit selected from the group consisting of a repeating unit as shown in Chemical Formula 1("repeating unit 1"), a repeating unit as shown in Chemical Formula 2("repeating unit 2"), and a repeating unit as shown in Chemical Formula 3 ("repeating unit 3"): 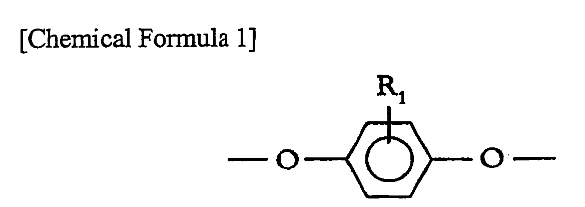 where R₁ is methyl, ethyl, Cl or Br.

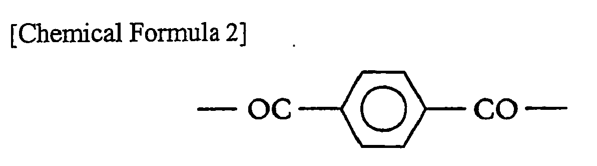

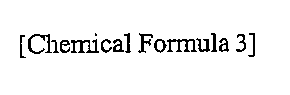

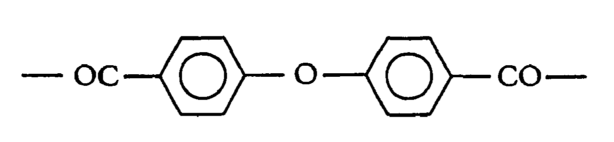

4. The polycarbonate resin composition as defined in claim 2, wherein said aromatic polyester amide resin (b₂) comprises at least one repeating unit selected from the group consisting of repeating units 1, 2 and 3, and a repeating unit as shown in Chemical Formula 4 ("repeating unit 4"): 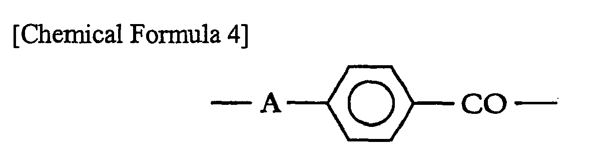 where A is O or NH.

5. The polycarbonate resin composition as defined in claim 1, wherein said core-shell graft copolymer has a core-shell structure by grafting at least one unsaturated compound selected from the group consisting of C₁-C₈ methacrylic acid alkyl esters, C₁-C₈ acrylic acid alkyl esters, maleic acid anhydrides, C₁-C₄ alkyl or phenyl nuclear-substituted maleimide onto a rubber polymerized with at least one selected from the group consisting of C₄-C₆ diene rubber monomer, acrylate rubber monomer and silicone rubber monomer.

## Patentansprüche

1. Polycarbonatharzzusammensetzung mit guter Ermüdungsfestigkeit, die (A) 80 bis 98 Gewichtsteile eines Polycarbonatharzes, (B) 0,1 bis 7 Gewichtsteile eines thermotropen aromatischen flüssigkristallinen Polymerharzes und (C) 1 bis 20 Gewichtsteile eines Kem-Schale-Pfropfcopolymers umfasst.

2. Polycarbonatharzzusammensetzung nach Anspruch 1, wobei es sich bei dem thermotropen aromatischen flüssigkristallinen Polymerharz (B) um ein aromatisches Polyesterharz (b₁) oder ein aromatisches Polyesteramidharz (b₂) handelt.

3. Polycarbonatharzzusammensetzung nach Anspruch 2, wobei das aromatische Polyesterharz (b₁) eine chemische Struktur aufweist, die mindestens eine Wiederholungseinheit, ausgewählt aus der Gruppe, bestehend aus einer wie in der Chemischen Formel 1" dargestellten Wiederholungseinheit ("Wiederholungseinheit 1"), einer wie in der Chemischen Formel 2" dargestellten Wiederholungseinheit ("Wiederholungseinheit 2") und einer wie in der Chemischen Formel 3" dargestellten Wiederholungseinheit ("Wiederholungseinheit 3"), umfasst. 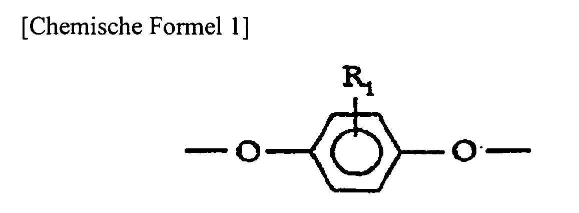 wobei R₁ für Methyl, Ethyl, Cl oder Br steht.

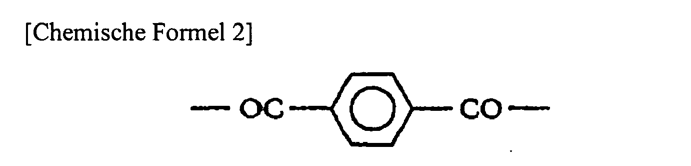

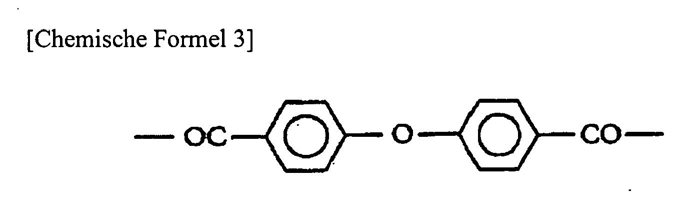

4. Polycarbonatharzzusammensetzung nach Anspruch 2, wobei das aromatische Polyesteramidharz (b₂) mindestens eine Wiederholungseinheit, ausgewählt aus der Gruppe, bestehend aus den Wiederholungseinheiten 1, 2 und 3 und einer wie in der Chemischen Formel 4" dargestellten Wiederholungseinheit ("Wiederholungseinheit 4"), umfasst. 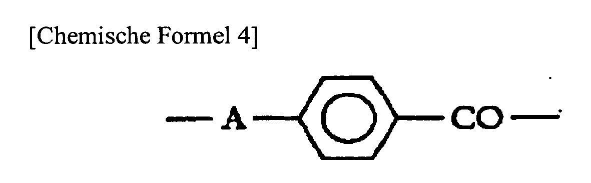 wobei A für OH oder NH steht.

5. Polycarbonatharzzusammensetzung nach Anspruch 1, wobei das Kern-Schale-Pfropfcopolymer durch Pfropfen mindestens einer ungesättigten Verbindung, ausgewählt aus der Gruppe, bestehend aus C₁-C₈-Methacrylsäurealkylestern, C₁-C₈-Acrylsäurealkylestern, Maleinsäureanhydriden, C₁-C₄-Alkyl- oder Phenylkern-substituiertem Maleimid auf einen Kautschuk, der mit mindestens einem, ausgewählt aus der Gruppe, bestehend aus C₄-C₆-Dienkautschukmonomer, Acrylatkautschukmonomer und Siliconkautschukmonomer polymerisiert ist, eine Kem-Schale-Struktur aufweist.

## Revendications

1. Composition de résine de polycarbonate ayant une bonne résistance à la fatigue, qui comprend (A) 80 à 98 parties en poids d'une résine de polycarbonate, (B) 0,1 à 7 parties en poids d'une résine polymère cristal liquide aromatique thermotrope, et (C) 1 à 20 parties en poids d'un copolymère greffé à structure coeur-coque.

2. Composition de résine de polycarbonate selon la revendication 1, dans laquelle ladite résine polymère cristal liquide aromatique thermotrope (B) est une résine de polyester aromatique (b₁) ou une résine de polyesteramide aromatique (b₂).

3. Composition de résine de polycarbonate selon la revendication 2, dans laquelle ladite résine de polyester aromatique (b₁) a une structure chimique comprenant au moins un motif répétitif choisi dans le groupe consistant en un motif répétitif tel que représenté par la Formule Chimique 1 ("motif répétitif 1 "), une motif répétitif tel que représenté par la Formule Chimique 2 ("motif répétitif 2") et une motif répétitif tel que représenté par la Formule Chimique 3 ("motif répétitif 3") : 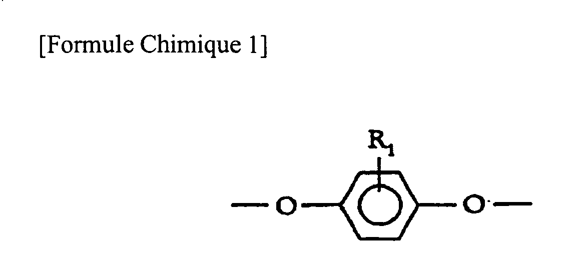 où R₁ est le radical méthyle, éthyle, Cl ou Br.

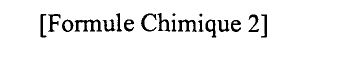

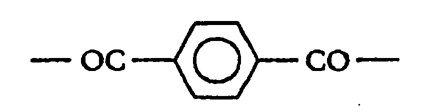

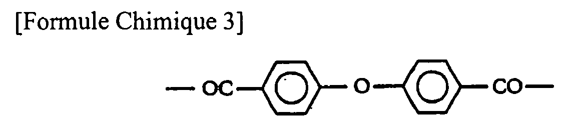

4. Composition de résine de polycarbonate selon la revendication 2, dans laquelle ladite résine de polyesteramide aromatique (b₂) comprend au moins une motif répétitif choisi dans le groupe consistant en les motifs répétitifs 1, 2 et 3, et un motif répétitif tel que représenté par la Formule Chimique 4 ("motif répétitif 4") : 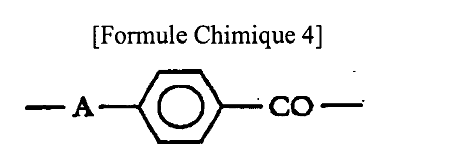 où A est O ou NH.

5. Composition de résine de polycarbonate selon la revendication 1, dans laquelle ledit copolymère greffé à structure coeur-coque possède une structure coeur-coque par greffage d'au moins un composé insaturé choisi dans le groupe consistant en les esters alkyliques en C₁-C₈ de l'acide méthacrylique, les esters alkyliques en C₁-C₈ de l'acide acrylique, les anhydrides de l'acide maléique, les maléimides à substitution nucléaire alkyle en C₁-C₄ ou phényle, sur un caoutchouc polymérisé avec au moins un monomère choisi dans le groupe consistant en un caoutchouc diène en C₄-C₆ monomère, un caoutchouc acrylate monomère et un caoutchouc silicone monomère.
